# EUROPÄISCHE PATENTSCHRIFT

(11) **EP 3 557 023 B1**
(45) Veröffentlichungstag und Bekanntmachung des Hinweises auf die Patenterteilung: **23.12.2020**
(21) Anmeldenummer: 19168252.5
(22) Anmeldetag: 09.04.2019
(51) Int. Cl.: F02B 29/04, F02M 31/20

(54) **LADELUFTKÜHLER EINER BRENNKRAFTMASCHINE UND VERFAHREN ZUR LADELUFTKÜHLUNG EINER BRENNKRAFTMASCHINE**
CHARGE AIR COOLER FOR A COMBUSTION ENGINE AND METHOD FOR CHARGE AIR COOLING OF A COMBUSTION ENGINE
REFROIDISSEUR D'AIR DE SURALIMENTATION D'UN MOTEUR À COMBUSTION INTERNE ET PROCÉDÉ DE REFROIDISSEMENT D'AIR DE SURALIMENTATION D'UN MOTEUR À COMBUSTION INTERNE

(30) Priorität: 19.04.2018 DE 102018205961
(43) Veröffentlichungstag der Anmeldung: 23.10.2019
(73) Patentinhaber: VOLKSWAGEN AKTIENGESELLSCHAFT, 38440 Wolfsburg (DE)
(72) Erfinder: Kiel, Marco, 39116 Magdeburg (DE); Burbank, Jörg, 31785 Hameln (DE); von Hausen, Matthias, 38108 Braunschweig (DE)

(56) Entgegenhaltungen:
- DE-A1-102007 021 708
- US-A1- 2016 160 736

## Beschreibung

Die Erfindung betrifft einen Ladeluftkühler einer Brennkraftmaschine mit den Merkmalen gemäß dem Oberbegriff des Anspruchs 1. Des Weiteren betrifft die Erfindung ein Verfahren zur Ladeluftkühlung einer Brennkraftmaschine mit den Merkmalen gemäß dem Oberbegriff des Anspruchs 9.

Bei Brennkraftmaschinen ist es in einer Vielzahl von Betriebssituationen notwendig, die den Brennkammern zuzuführende Ladeluft zu temperieren, insbesondere zu kühlen. Vor allem bei der Aufladung von Brennkraftmaschinen erwärmt sich die eintretende Ladeluft aufgrund der Kompression über den Umgebungsdruck derart stark, dass eine Kühlung nach der Kompression erforderlich ist, um eine gewünschte Füllung der Brennkammern mit Ladeluft zu erreichen. Zu diesem Zweck werden so genannte Ladeluftkühler in der Luftzufuhr der Brennkraftmaschine eingesetzt. Ein Ladeluftkühler umfasst einen Wärmetauscher, mit dem eine Wärmeübertragung von der den Ladeluftkühler durchströmenden Ladeluft auf ein Kühlmittel, auch als Kühlfluid bezeichnet, insbesondere bevorzugt eine Kühlflüssigkeit, bewirkt wird.

Ladeluftkühler sind in konstruktiven Details für eine möglichst starke Wärmeaustauschverbindung zwischen Ladeluft und Kühlmittel ausgelegt. Beispielsweise wird im Dokument DE 10 2007 021 708 A1 ein flüssigkeitsgekühler Ladeluftkühler beschrieben, in welchem das Kühlmittel über ein Netz aus mehreren Kühlmittelströmungspfaden geführt und in Wärmeaustausch mit der Ladeluft in einem Wirkungsabschnitt gebracht wird. Der I Ladeluftkühler weist einen Plattenstapel auf, welcher abwechselnde Ebenen von Kühlmittelströmungspfaden und Ladeluftpfaden definiert. Im Wirkungsabschnitt meandriert jeder Kühlmittelströmungspfad mehrfach entlang seiner Erstreckung durch den Ladeluftkühler, wobei teilweise Dämme den Strömungspfad begrenzen. Die Dämme sind mit Kerben versehen, so dass ein Teil des Kühlmittels durch die Dämme hindurchströmen und dabei einen Teilabschnitt des Kühlmittelströmungspfads abkürzt oder umgeht. Die mittels der Kerben realisierten Bypässe haben gemäß der Darstellung im Dokument DE 10 2007 021 708 A1 die Wirkung, dass eine gute Kühlmittelströmungsverteilung erreicht wird. Diese Wirkung scheint insbesondere dadurch erzielt zu werden, dass die Kerben in den Dämmen in Strömungsumlenkungsabschnitten des meandrierenden Kühlmittelströmungspfades beginnen und/oder münden.

In diesem Zusammenhang offenbart das Dokument US 2016/160736 A1 einen Ladeluftkühler welcher aus einer Mehrzahl an kühlmitteldurchströmten Rohren und zweier Wasserkästen besteht. Der Ladeluftkühler weist weiterhin wenigstens ein Umschaltventil in einem der Wasserkästen auf mittels welchem der Kühlmittelstrom umgeleitet werden kann, sodass nur noch ein Teil der Rohre durchströmt wird.

Bei Kühlflüssigkeiten als Kühlmittel ist in der Praxis ein Sieden unbedingt zu vermeiden, damit keine Schädigungen des Kühlmittels und/oder von Bauteilen der Brennkraftmaschine, welche mittels des Kühlmittels temperiert werden, durch Überhitzung auftreten. Wird bereits warme Luft zur Aufladung einer Brennkraftmaschine verdichtet, kann die komprimierte Ladeluft allerdings eine Temperatur aufweisen, welche größer als die Siedetemperatur der Kühlflüssigkeit ist.

Aufgabe der vorliegenden Erfindung ist es daher, die Kühlmitteldurchströmung eines Ladeluftkühlers derart auszugestalten, dass einem Sieden des Kühlmittels vorgebeugt ist.

Diese Aufgabe wird erfindungsgemäß durch einen Ladeluftkühler mit den Merkmalen gemäß Anspruch 1 gelöst. Vorteilhafte Weiterbildungen der Erfindung sind in den abhängigen Ansprüchen charakterisiert. Erfindungsgemäß wird ein Ladeluftkühler zum Kühlen der Ladeluft einer Brennkraftmaschine, anders gesagt geeignet für das Kühlen der Ladeluft einer Brennkraftmaschine geschaffen: Ein derartiger Ladeluftkühler wird nachfolgend als Ladeluftkühler einer Brennkraftmaschine bezeichnet. Dabei umfasst der Ladeluftkühler die Brennkraftmaschine nicht.

Ein erfindungsgemäßer Ladeluftkühler einer Brennkraftmaschine umfasst einen Kühlmitteleinlass und einen Kühlmittelauslass, einen sich vom Kühlmitteleinlass zum Kühlmittelauslass erstreckenden Kühlmittelströmungspfad, einen Ladelufteintritt, einen Ladeluftaustritt und einen sich vom Ladelufteintritt zum Ladeluftaustritt erstreckenden Ladeluftpfad. Der Ladeluftpfad steht entlang eines Wirkungsabschnitts des Kühlmittelströmungspfades innerhalb des Ladeluftkühlers mit dem Kühlmittelströmungspfad in Wärmeaustauschverbindung. Der Kühlmittelströmungspfad weist von einem ersten Punkt des Kühlmittelströmungspfades zu einem zweiten Punkt des Kühlmittelströmungspfades, der entlang des Kühlmittelströmungspfads stromab des ersten Punktes liegt, einen Bypass auf. Der Bypass hat einen von einem sich zwischen dem ersten und dem zweiten Punkt erstreckenden Teilpfad des Kühlmittelströmungspfads verschiedenen Umleitungsströmungspfad. Erfindungsgemäß liegen der erste Punkt stromauf des Wirkungsabschnitts am Ladeluftaustritt und der zweite Punkt stromab des Wirkungsabschnitts am Ladelufteintritt, insbesondere innerhalb des Ladeluftkühlers.

Der Bypass kann auch als Verbindung oder als Umleitung bezeichnet werden. Das Kühlmittel ist insbesondere eine Kühlflüssigkeit. Bevorzugt sind der Kühlmittelströmungspfad und der Ladeluftpfad derart durch den Ladeluftkühler geführt, dass eine Kühlung im Gegenstromprinzip, gegebenenfalls in bestimmten Ausführungsformen ergänzt um einen gleichzeitig in Querrichtung meandrierenden Verlauf des Kühlmittelströmungspfades, stattfindet.

Im erfindungsgemäßen Ladeluftkühler wird über den Bypass Kühlmittel direkt von einem ersten Punkt im Kühlmittelströmungspfad am, also in der Nähe des, bevorzugt genau am Ladeluftaustritt - daher mit geringerer Wärmeaustauschverbindung zur Ladeluft als im gesamten Wirkungsabschnitt -, bevor es im Wirkungsabschnitt in Wärmeaustausch mit der Ladeluft getreten ist, an einen stromabwärts liegenden zweiten Punkt an, also in der Nähe, bevorzugt direkt an den Punkt, des Ladelufteintritts in den Wärmetauscher gebracht. Auf diese Weise wird eine Teilmenge von Kühlmittel am Eintritt der Ladeluft bereitgestellt, wobei diese Teilmenge eine geringere Temperatur und damit eine höhere Aufnahmekapazität von Wärme aus der Ladeluft aufweist als die komplementäre Teilmenge des Kühlmittels, welche den Kühlmittelströmungspfad entlang des gesamten Wirkungsabschnitts passiert hat. Dadurch gelangt im Betrieb des Ladeluftkühlers am Ladelufteintritt Kühlmittel mit einer im Vergleich zur Situation ohne Einsatz eines Bypasses geringeren Temperatur zum Einsatz. Der Gefahr eines unerwünschten Siedens des Kühlmittels am Ladelufteintritt wird damit durch die konstruktive Ausführung des Ladeluftkühlers entgegengetreten.

In bevorzugten Ausführungsformen des erfindungsgemäßen Ladeluftkühlers ist der Kühlmittelströmungspfad Teil eines Kühlmittelströmungsnetzes und der zweite Punkt liegt stromab eines Sammelpunktes des Kühlmittelströmungsnetzes und/oder ist der Ladeluftpfad Teil eines Ladeluftnetzes durch den Ladeluftkühler und liegt der zweite Punkt stromauf eines Verzweigungspunktes des Ladeluftnetzes. Des Weiteren oder alternativ dazu kann der erste Punkt stromauf eines Verzweigungspunktes des Kühlmittelströmungsnetzes und/oder stromab eines Sammelpunktes des Ladeluftnetzes liegen. Mit anderen Worten, in diesen Ausführungsformen kann der Ladeluftkühler im Wirkungsabschnitt ein Kühlmittelströmungsnetz und/oder ein Ladeluftnetz aufweisen. Dabei liegen der zweite Punkt und/oder der erste Punkt außerhalb des Kühlmittelströmungsnetzes und des Ladeluftnetzes. Der erfindungsgemäße Bypass vermeidet damit den Wirkungsabschnitt, in welchem eine besonders starke Wärmeaustauschverbindung zwischen Kühlmittel und Ladeluft zur Kühlung der Ladeluft genutzt wird, so dass sich in der Folge das Kühlmittel erwärmt.

Es ist besonders vorteilhaft für den erfindungsgemäßen Ladeluftkühler, wenn der Umleitungsströmungspfad wenigstens teilweise in einer schwächeren Wärmeaustauschverbindung mit dem Ladeluftpfad als der Kühlmittelströmungspfad steht. In derartigen Ausführungsformen wird eine Erwärmung des den Umleitungsströmungspfad durchströmenden Kühlmittels möglichst gering gehalten, bevorzugt ganz vermieden, so dass Kühlmittel mit einer möglichst niedrigeren Temperatur am Ladelufteintritt bereitgestellt werden kann. Konkret kann die schwächere Wärmeaustauschverbindung dadurch konstruktiv ausgeführt werden, dass kein direkter Wandkontakt zwischen Ladeluftpfad und Umleitungsströmungspfad realisiert wird oder dass eine starke Wärmeisolation zwischen Ladeluftpfad und Umleitungsströmungspfad vorgesehen wird. Beispielsweise kann der Umleitungsströmungspfad vom ersten zum zweiten Punkt eine kürzere, insbesondere eine deutlich oder wesentlich kürzere Weglänge als der Teilpfad des Kühlmittelströmungspfads aufweisen.

Die Wirksamkeit des erfindungsgemäßen Ladeluftkühlers wird in besonders vorteilhaften Ausführungsformen dadurch noch weiter gesteigert, dass der Umleitungsströmungspfad mit dem Ladeluftpfad entlang eines Direktwirkungsabschnitts des Umleitungsströmungspfades vor dem zweiten Punkt in einer Wärmeaustauschverbindung steht. Auf diese Weise wird im Betrieb der Ladeluft Wärme entzogen, indem diese auf die Teilmenge des Kühlmittels aus dem Umleitungsströmungspfad übertragen wird, wobei eine verglichen zur Situation ohne Bypass größere Wärmeaufnahmefähigkeit des Kühlmittels besteht.

In einer einfachen und kompakten Konstruktion derartiger Ausführungsformen des erfindungsgemäßen Ladeluftkühlers verläuft der Direktwirkungsabschnitts des Umleitungsströmungspfades im Wesentlichen, bevorzugt genau quer zum Ladeluftpfad.

Im Zusammenhang der Erfindung steht auch eine Brennkraftmaschine, insbesondere eine aufladbare Brennkraftmaschine, welche einen Ladeluftkühler mit Merkmalen oder Merkmalskombinationen gemäß dieser Darstellung aufweist. Die Brennkraftmaschine kann eine fremdgezündete, insbesondere funkengezündete oder (bevorzugt) eine selbstzündende Brennkraftmaschine sein. In vorteilhaften Ausführungsformen der Brennkraftmaschine ist der Ladeluftkühler in einem Saugrohr der Brennkraftmaschine integriert, so dass eine besonders kompakte Bauform realisiert ist. Des Weiteren oder alternativ dazu ist der Ladeluftkühler eine Komponente in einem Niedertemperaturkreislauf einer Kühleinrichtung der Brennkraftmaschine. Die Kühleinrichtung kann neben dem Niedertemperaturkreislauf auch einen Hochtemperaturkreislauf aufweisen. Auf diese Weise kann der Ladeluftkühler neben weiteren zu kühlenden Bauteilen oder Komponenten mit Kühlmittel versorgt, gegebenenfalls gesteuert oder geregelt versorgt werden.

Die Brennkraftmaschine kann als Antriebsmaschine eines Fahrzeugs, insbesondere eines gleislosen Landkraftfahrzeugs, zum Beispiel eines Automobils oder eines Nutzfahrzeugs, ausgeführt sein.

Im Zusammenhang des erfinderischen Gedankens steht auch ein Verfahren zur Ladeluftkühlung einer Brennkraftmaschine. In diesem Verfahren durchströmt Ladeluft einen Ladeluftkühler von einem Ladelufteintritt zu einem Ladeluftaustritt entlang eines Ladeluftpfads. Des Weiteren durchströmt Kühlmittel den Ladeluftkühler von einem Kühlmitteleinlass zu einem Kühlmittelauslass entlang eines Kühlmittelströmungspfads. Dabei steht der Ladeluftpfad entlang eines Wirkungsabschnitts des Kühlungsströmungspfades innerhalb des Ladeluftkühlers in Wärmeaustauschverbindung mit dem Kühlmittelströmungspfad. Im erfindungsgemäßen Verfahren wird Kühlmittel von einem ersten Punkt des Kühlmittelströmungspfades zu einem zweiten Punkt des Kühlmittelströmungspfades, der entlang des Kühlmittelströmungspfads stromab des ersten Punktes liegt, durch einen Bypass geführt. Dabei weist der Bypass einen von einem sich zwischen dem ersten und dem zweiten Punkt erstreckenden Teilpfad des Kühlmittelströmungspfads verschiedenen Umleitungsströmungspfad auf. Erfindungsgemäß wird das Kühlmittel durch den Bypass vom ersten Punkt stromauf des Wirkungsabschnitts am Ladeluftaustritt zum zweiten Punkt stromab des Wirkungsabschnitts am Ladelufteintritt geführt.

In vorteilhaften Ausgestaltungen des erfindungsgemäßen Verfahrens wird ein Ladeluftkühler mit Merkmalen oder Merkmalskombinationen gemäß dieser Darstellung verwendet. Des Weiteren oder alternativ dazu wird eine derartige Ausgestaltung des Verfahrens bevorzugt in einer Brennkraftmaschine mit Merkmalen oder Merkmalskombinationen gemäß dieser Darstellung angewendet.

Weitere Vorteile und vorteilhafte Ausführungsformen und Weiterbildungen der Erfindung werden anhand der nachfolgenden Beschreibung unter Bezugnahme auf die Figuren dargestellt, so dass die Erfindung sowie das technische Umfeld nachfolgend anhand der beiliegenden Figuren näher erläutert werden. Es ist darauf hinzuweisen, dass die Erfindung durch die angeführten Ausführungsbeispiele nicht beschränkt werden soll. Insbesondere ist es für den Fachmann, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind.

Es zeigt im Einzelnen:
- Figur 1: eine schematische Darstellung der Topologie einer besonders vorteilhaften Ausführungsform des erfindungsgemäßen Ladeluftkühlers, und
- Figur 2: eine Topologie eines Niedertemperaturkreislaufs einer Ausführungsform einer erfindungsgemäßen Brennkraftmaschine mit einem erfindungsgemäßen Ladeluftkühler.

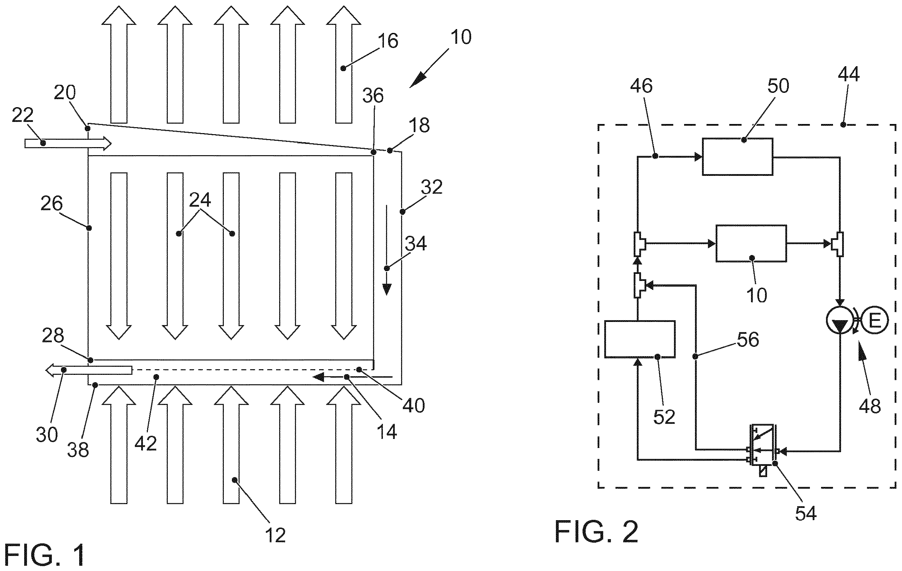

In der Figur 1 ist schematisch die Topologie einer besonders vorteilhaften Ausführungsform des erfindungsgemäßen Ladeluftkühlers 10 dargestellt. Heiße Ladeluft 12 tritt an einem Ladelufteintritt 14 in den Ladeluftkühler 10 ein. Kalte Ladeluft 16 verlässt den Ladeluftkühler 10 an einem Ladeluftaustritt 18. Der Ladeluftpfad verläuft daher in dieser Zeichnung im Wesentlichen von unten nach oben durch den Ladeluftkühler 10. An einem Kühlmitteleinlass 20 gelangt kaltes Kühlmittel 22 in den Ladeluftkühler 10. Ausgehend vom Kühlmitteleinlass 20 verzweigt sich der durch eine Abfolge von Pfeilen zeichnerisch dargestellte Kühlmittelströmungspfad auf einem Teilpfad 24 in mehrere im Wesentlichen zueinander parallele Einzelpfade. Der Teilpfad 24 verläuft im Wesentlichen entgegen der Strömung der Ladeluft durch den Ladeluftkühler 10 und stellt einen Wirkungsabschnitt 26 dar, in welchem das Kühlmittel mit der Ladeluft in Wärmeaustauschverbindung steht, so dass sich die Temperaturen angleichen, insbesondere die Temperatur der zunächst heißen Ladeluft sinkt und die Temperatur des zunächst kalten Kühlmittels ansteigt. Das auf diese Weise erwärmte Kühlmittel verlässt gesammelt über einen Kühlmittelauslass 28 als heißes Kühlmittel 30 den Ladeluftkühler 10.

Erfindungsgemäß weist der Ladeluftkühler 10 einen Bypass 32 auf. Durch den Bypass 32 gelangt Kühlmittel auf einem zeichnerisch durch einen Pfeil dargestellten Umleitungsströmungspfad 34 direkt in Umgehung des Wirkungsabschnitts 26 von einem ersten Punkt 36 auf der Seite des, also am Ladeluftaustritt 18 zu einem zweiten Punkt 38 auf der Seite des, also am Ladelufteintritt 14. Der Bypass 32 verläuft getrennt und thermisch isoliert vom Wirkungsabschnitt 26, so dass eine deutlich geringere Wärmeaustauschverbindung, insbesondere keine direkte oder unmittelbare Verbindung zwischen der den Bypass durchströmenden Teilmenge des Kühlmittels und der Ladeluft besteht.

Die in der Figur 1 gezeigte Ausführungsform weist des Weiteren eine Schottwand 40 auf, welche einen Direktwirkungsabschnitt 42 des Umleitungsströmungspfades 34 durch den Bypass 32 vom Kühlmittelströmungspfad, welcher auch den Wirkungsabschnitt 26 durchläuft, abtrennt. Auf diese Weise wird ein thermischer Schutzschild gebildet. Im Direktwirkungsabschnitt 42 wird im Querstrom zum Ladeluftpfad eine Wärmeaustauschverbindung zwischen der den Bypass 32 durchströmenden Teilmenge des Kühlmittels und der in den Ladeluftkühler 10 eintretenden Ladeluft bereitgestellt, so dass das auf dieser Seite des Ladeluftkühlers im Vergleich zur komplementären Teilmenge des Kühlmittels, welche entlang des Kühlmittelströmungspfades durch den Ladeluftkühler strömt, kalte Kühlmittel die eintretende Ladeluft mit einer vergleichsweise großen Wärmeaufnahmekapazität kühlt. Auf diese Weise wird einem Sieden des flüssigen Kühlmittels wirksam vorgebeugt.

Die konkrete Teilmenge des Kühlmittels, welche durch den Bypass strömt, wird so ausgelegt, dass eine ausreichende Wärmeaufnahme bereitgestellt wird, um eine Erwärmung des Kühlmittels über die Siedetemperatur hinaus, vermieden wird. Hier nicht zeichnerisch dargestellt ist eine Weiterentwicklung des erfindungsgemäßen Ladeluftkühlers, in welchem der Bypass eine Durchflussmengenbegrenzungsvorrichtung aufweist, welche ein- und ausschaltbar oder quantitativ steuerbar, gegebenenfalls regelbar, sein kann. Auf diese Weise kann situativ gemäß den Umgebungsbedingungen und/oder den Betriebsbedingungen und/oder den Betriebsparametern eine angemessene Teilmenge von Kühlmittel über den Bypass bereitgestellt werden.

Die Figur 2 zeigt eine Topologie eines Niedertemperaturkreislaufs 46 einer Ausführungsform einer erfindungsgemäßen Brennkraftmaschine 44 mit einem erfindungsgemäßen Ladeluftkühler 10. Der Ladeluftkühler 10 ist in diesem Fall als saugrohrintegrierter Ladeluftkühler (SiLLK) ausgeführt. Der Niedertemperaturkreislauf 46 weist eine elektrische Pumpe 48 auf, welche das Kühlmittel im Niedertemperaturkreislauf 46 gesteuert umwälzt. Bevorzugt handelt es sich bei der Brennkraftmaschine um eine selbstzündenden Brennkraftmaschine, insbesondere eine Dieselbrennkraftmaschine. Parallelgeschaltet zum Ladeluftkühler 10 ist im Niedertemperaturkreislauf 46 eine weitere zu kühlende Komponente 50, zum Beispiel eine Reduktionsmitteldosiervorrichtung, insbesondere eines Reduktionsmittel für die selektive katalytische Reduktion von Stickoxiden, einer Abgasanlage der Brennkraftmaschine 44, mit Kühlmittel zur Temperierung versorgt. Darüber hinaus weist der Niedertemperaturkreislauf einen Niedertemperaturkühler 52, insbesondere mit einem Kühlmittel-Luft-Wärmetauscher, auf, mit dessen Hilfe die Wärmemenge im Kühlmittel reduziert werden kann. Der Niedertemperaturkühler 52 kann dadurch abgeschaltet werden, dass der Fluss des Kühlmittels mittels des Ventils 54 durch den Niedertemperaturkühler 52 unterbrochen und stattdessen durch eine Umgehungsleitung 56 am Niedertemperaturkühler 52 vorbei geleitet wird.

### BEZUGSZEICHENLISTE

- 10: Ladeluftkühler
- 12: heiße Ladeluft
- 14: Ladelufteintritt
- 16: kalte Ladeluft
- 18: Ladeluftaustritt
- 20: Kühlmitteleinlass
- 22: kaltes Kühlmittel
- 24: Teilpfad
- 26: Wirkungsabschnitt
- 28: Kühlmittelauslass
- 30: heißes Kühlmittel
- 32: Bypass
- 34: Umleitungsströmungspfad
- 36: erster Punkt
- 38: zweiter Punkt
- 40: Schottwand
- 42: Direktwirkungsabschnitt
- 44: Brennkraftmaschine
- 46: Niedertemperaturkreislauf
- 48: elektrische Pumpe
- 50: weitere Komponente
- 52: Niedertemperaturkühler
- 54: Ventil
- 56: Umgehungsleitung

## Patentansprüche

1. Ladeluftkühler (10) einer Brennkraftmaschine (44), mit einem Kühlmitteleinlass (20) und einem Kühlmittelauslass (28), einem sich vom Kühlmitteleinlass (20) zum Kühlmittelauslass (28) erstreckenden Kühlmittelströmungspfad, einem Ladelufteintritt (14), einem Ladeluftaustritt (18) und einem sich vom Ladelufteintritt (14) zum Ladeluftaustritt (18) erstreckenden Ladeluftpfad, welcher entlang eines Wirkungsabschnitts (26) des Kühlmittelströmungspfades innerhalb des Ladeluftkühlers (10) in Wärmeaustauschverbindung mit dem Kühlmittelströmungspfad steht, wobei der Kühlmittelströmungspfad von einem ersten Punkt (36) des Kühlmittelströmungspfades zu einem zweiten Punkt (38) des Kühlmittelströmungspfades, der entlang des Kühlmittelströmungspfads stromab des ersten Punktes (36) liegt, einen Bypass (32) mit einem von einem sich zwischen dem ersten (36) und dem zweiten Punkt (38) erstreckenden Teilpfad (24) des Kühlmittelströmungspfads verschiedenen Umleitungsströmungspfad (34) aufweist, **dadurch gekennzeichnet**
**dass** der erste Punkt (36) stromauf des Wirkungsabschnitts (26) am Ladeluftaustritt (18) und der zweite Punkt (38) stromab des Wirkungsabschnitts (26) am Ladelufteintritt (14) liegen.

2. Ladeluftkühler (10) gemäß Anspruch 1,
**dadurch gekennzeichnet**
der Kühlmittelströmungspfad Teil eines Kühlmittelströmungsnetzes ist und der zweite Punkt (38) stromab eines Sammelpunktes des Kühlmittelströmungsnetzes liegt und/oder der Ladeluftpfad Teil eines Ladeluftnetzes durch den Ladeluftkühler ist und der zweite Punkt (38) stromauf eines Verzweigungspunktes des Ladeluftnetzesliegt.

3. Ladeluftkühler (10) gemäß Anspruch 1,
**dadurch gekennzeichnet**
**dass** Kühlmittelströmungspfad Teil eines Kühlmittelströmungsnetzes ist und der erste Punkt (36) stromauf eines Verzweigungspunktes des Kühlmittelströmungsnetzes liegt und/oder der Ladeluftpfad Teil eines Ladeluftnetzes durch den Ladeluftkühler ist und der erste Punkt (36) stromab eines Sammelpunktes des Ladeluftnetzes liegt.

4. Ladeluftkühler (10) gemäß einem der vorhergehenden Ansprüche,
**dadurch gekennzeichnet**
**dass** der Umleitungsströmungspfad (34) wenigstens teilweise in einer schwächeren Wärmeaustauschverbindung mit dem Ladeluftpfad als der Kühlmittelströmungspfad steht.

5. Ladeluftkühler (10) gemäß einem der vorhergehenden Ansprüche,
**dadurch gekennzeichnet**
**dass** der Umleitungsströmungspfad mit dem Ladeluftpfad entlang eines Direktwirkungsabschnitts (42) des Umleitungsströmungspfades (34) vordem zweiten Punkt in einer Wärmeaustauschverbindung steht.

6. Ladeluftkühler (10) gemäß Anspruch 5,
**dadurch gekennzeichnet**
**dass** der Direktwirkungsabschnitts (42) des Umleitungsströmungspfades (34) im Wesentlichen quer zum Ladeluftpfad verläuft.

7. Brennkraftmaschine (44) mit einem Ladeluftkühler (10) gemäß einem der vorhergehenden Ansprüche.

8. Brennkraftmaschine (44) gemäß Anspruch 7,
**dadurch gekennzeichnet**
**dass** der Ladeluftkühler (10) in einem Saugrohr der Brennkraftmaschine (44) integriert ist und/oder dass der Ladeluftkühler (10) eine Komponente in einem Niedertemperaturkreislauf (46) einer Kühleinrichtung der Brennkraftmaschine (44) ist und/oder dass die Brennkraftmaschine (44) aufladbar ist.

9. Verfahren zur Ladeluftkühlung einer Brennkraftmaschine (44), in welchem Ladeluft einen Ladeluftkühler (10) von einem Ladelufteintritt (14) zu einem Ladeluftaustritt (18) entlang eines Ladeluftpfads durchströmt und Kühlmittel den Ladeluftkühler (10) von einem Kühlmitteleinlass (20) zu einem Kühlmittelauslass (28) entlang eines Kühlmittelströmungspfads durchströmt, wobei der Ladeluftpfad entlang eines Wirkungsabschnitts (26) des Kühlungsströmungspfades innerhalb des Ladeluftkühlers (10) in Wärmeaustauschverbindung mit dem Kühlmittelströmungspfad steht, und in welchem Kühlmittel von einem ersten Punkt (36) des Kühlmittelströmungspfades zu einem zweiten Punkt (38) des Kühlmittelströmungspfades, der entlang des Kühlmittelströmungspfads stromab des ersten Punktes (36) liegt, durch einen Bypass (32) geführt wird, der einen von einem sich zwischen dem ersten (36) und dem zweiten Punkt (38) erstreckenden Teilpfad (24) des Kühlmittelströmungspfads verschiedenen Umleitungsströmungspfad (34) aufweist,
**dadurch gekennzeichnet**
**dass** das Kühlmittel durch den Bypass (32) vom ersten Punkt (36) stromauf des Wirkungsabschnitts (26) am Ladeluftaustritt (18) zum zweiten Punkt (38) stromab des Wirkungsabschnitts am Ladelufteintritt (14) geführt wird.

10. Verfahren zur Ladeluftkühlung einer Brennkraftmaschine (44) gemäß Anspruch 9, **gekennzeichnet durch**
die Verwendung eines Ladeluftkühlers (10) mit den Merkmalen gemäß einem der Ansprüche 2 bis 6 und/oder die Anwendung des Verfahrens in einer Brennkraftmaschine (44) mit den Merkmalen des Anspruchs 8.

## Claims

1. Charge air cooler (10) of an internal combustion engine (44), having a coolant inlet (20) and a coolant outlet (28), a coolant flow path extending from the coolant inlet (20) to the coolant outlet (28), a charge air intake (14), a charge air outlet (18) and a charge air path extending from the charge air intake (14) to the charge air outlet (18), which along a function section (26) of the coolant flow path within the charge air cooler (10) is in thermal communication with the coolant flow path, wherein the coolant flow path has a bypass (32) from a first point (36) on the coolant flow path to a second point (38) on the coolant flow path, which lies on the coolant flow path downstream of the first point (36), said bypass (32) comprising a sub-path (24) of the coolant flow path, said sub-path extending between the first (36) and the second point (38) and differing from the diversion flow path (34),
**characterized in that**
the first point (36) lies upstream of the function section (26) at the charge air outlet (18) and the second point (38) lies downstream of the function section (26) at the charge air intake (14).

2. Charge air cooler (10) according to claim 1,
**characterized in that**
the coolant flow path is part of a coolant flow network and the second point (38) lies downstream of a collection point of the coolant flow network and/or the charge air path is part of a charge air network through the charge air cooler and the second point (38) lies upstream of a branch point of the charge air network.

3. Charge air cooler (10) according to claim 1,
**characterized in that**
the coolant flow path is part of a coolant flow network and the first point (36) lies upstream of a branch point of the coolant flow network and/or the charge air path is part of a charge air network through the charge air cooler and the first point (36) lies downstream of a collection point of the charge air network.

4. Charge air cooler (10) according to any one of the preceding claims,
**characterized in that**
the bypass flow path (34) is at least partially in a weaker heat exchange connection with the charge air path than is the coolant flow path.

5. Charge air cooler (10) according to any one of the preceding claims,
**characterized in that**
the bypass flow path is in a heat exchange connection with the charge air path along a direct-effect section (42) of the bypass flow path (34) upstream of the second point.

6. Charge air cooler (10) according to claim 5,
**characterized in that**
the direct-effect section (42) of the bypass flow path (34) runs essentially transversely to the charge air path.

7. Internal combustion engine (44) with a charge air cooler (10) according to any one of the preceding claims.

8. Internal combustion engine (44) according to claim 7,
**characterized in that**
the charge air cooler (10) is integrated in an intake manifold of the internal combustion engine (44) and/or the charge air cooler (10) is a component in a low-temperature circuit (46) of a cooling device of the internal combustion engine (44) and/or the internal combustion engine (44) can be charged.

9. Method for charge air cooling of an internal combustion engine (44), in which charge airflows through a charge air cooler (10) from a charge air inlet (14) to a charge air outlet (18) along a charge air path and coolant flows through the charge air cooler (10) from a coolant inlet (20) to a coolant outlet (28) along a coolant flow path, wherein the charge air path along a function section (26) of the coolant flow path within the charge air cooler (10) is in heat exchange connection with the coolant flow path and in which coolant from a first point (36) of the coolant flow path to a second point (38) of the coolant flow path, which lies on the coolant flow path downstream of the first point (36) is guided through a bypass (32), comprising a sub-path (24) of the coolant flow path, said sub-path extending between the first (36) and the second point (38) and differing from the bypass flow path (34),
**characterized in that**
the coolant is guided through the bypass (32) from the first point (36) upstream of the function section (26) at the charge air outlet (18) to the second point (38) downstream of the function section at the charge air inlet (14).

10. Method for the charge air cooling of an internal combustion engine (44) according to claim 9,
**characterized by**
the use of a charge air cooler (10) having the features according to any one of claims 2 to 6 and/or the application of the method in an internal combustion engine (44) having the features of claim 8.

## Revendications

1. Refroidisseur d'air de suralimentation (10) d'un moteur à combustion interne (44), comprenant une entrée de fluide de refroidissement (20) et une sortie de fluide de refroidissement (28), un trajet d'écoulement de fluide de refroidissement s'étendant de l'entrée de fluide de refroidissement (20) à la sortie de fluide de refroidissement (28), une entrée d'air de suralimentation (14), une sortie d'air de suralimentation (18), un trajet d'air de suralimentation, s'étendant de l'entrée d'air de suralimentation (14) à la sortie d'air de suralimentation (18), qui est en liaison d'échange de chaleur avec le trajet d'écoulement de fluide de refroidissement le long d'un segment actif (26) du trajet d'écoulement de fluide de refroidissement à l'intérieur du refroidisseur d'air de suralimentation (10), dans lequel le trajet d'écoulement de fluide de refroidissement présente, d'un premier point (36) du trajet d'écoulement de fluide de refroidissement à un second point (38) du trajet d'écoulement de fluide de refroidissement, qui se trouve en aval du premier point (36) le long du trajet d'écoulement de fluide de refroidissement, une dérivation (32) comprenant un trajet d'écoulement de détournement (34) différent d'un trajet partiel (24) du trajet d'écoulement de fluide de refroidissement s'étendant entre le premier (36) et le second point (38),
**caractérisé en ce**
**que** le premier point (36) se trouve en amont du segment actif (26) au niveau de la sortie d'air de suralimentation (18) et le second point (38) se trouve en aval du segment actif (26) au niveau de l'entrée d'air de suralimentation (14).

2. Refroidisseur d'air de suralimentation (10) selon la revendication 1,
**caractérisé en ce**
**que** le trajet d'écoulement de fluide de refroidissement forme une partie d'un réseau d'écoulement de fluide de refroidissement et le second point (38) se trouve en aval d'un point de collecte du réseau d'écoulement de fluide de refroidissement et/ou le trajet d'air de suralimentation forme une partie d'un réseau d'air de suralimentation à travers le refroidisseur d'air de suralimentation et le second point (38) se trouve en amont d'un point de branchement du réseau d'air de suralimentation.

3. Refroidisseur d'air de suralimentation (10) selon la revendication 1,
**caractérisé en ce**
**que** le trajet d'écoulement de fluide de refroidissement forme une partie d'un réseau d'écoulement de fluide de refroidissement et le premier point (36) se trouve en amont d'un point de branchement du réseau d'écoulement de fluide de refroidissement et/ou le trajet d'air de suralimentation forme une partie d'un réseau d'air de suralimentation à travers le refroidisseur d'air de suralimentation et le premier point (36) se trouve en aval d'un point de collecte du réseau d'air de suralimentation.

4. Refroidisseur d'air de suralimentation (10) selon l'une quelconque des revendications précédentes,
**caractérisé en ce**
**que** le trajet d'écoulement de détournement (34) se trouve au moins partiellement en liaison d'échange de chaleur plus faible avec le trajet d'air de suralimentation que le trajet d'écoulement de fluide de refroidissement.

5. Refroidisseur d'air de suralimentation (10) selon l'une quelconque des revendications précédentes,
**caractérisé en ce**
**que** le trajet d'écoulement de détournement se trouve en liaison d'échange de chaleur avec le trajet d'air de suralimentation le long d'un segment à action directe (42) du trajet d'écoulement de détournement (34) avant le second point.

6. Refroidisseur d'air de suralimentation (10) selon la revendication 5,
**caractérisé en ce**
**que** le segment à action directe (42) du trajet d'écoulement de détournement (34) s'étend essentiellement transversalement au trajet d'air de suralimentation.

7. Moteur à combustion interne (44) comprenant un refroidisseur d'air de suralimentation (10) selon l'une quelconque des revendications précédentes.

8. Moteur à combustion interne (44) selon la revendication 7,
**caractérisé en ce**
**que** le refroidisseur d'air de suralimentation (10) est intégré dans un conduit d'admission du moteur à combustion interne (44) et/ou **que** le refroidisseur d'air de suralimentation (10) est un composant dans un circuit basse température (46) d'un dispositif de refroidissement du moteur à combustion interne (44) et/ou **que** le moteur à combustion interne (44) est rechargeable.

9. Procédé de refroidissement d'air de suralimentation d'un moteur à combustion interne (44), dans lequel l'air de suralimentation traverse un refroidisseur d'air de suralimentation (10) d'une entrée d'air de suralimentation (14) à une sortie d'air de suralimentation (18) le long d'un trajet d'air de suralimentation et le fluide de refroidissement traverse le refroidisseur d'air de suralimentation (10) d'une entrée de fluide de refroidissement (20) à une sortie de fluide de refroidissement (28) le long d'un trajet d'écoulement de fluide de refroidissement, dans lequel le trajet d'air de suralimentation est en liaison d'échange de chaleur avec le trajet d'écoulement de fluide de refroidissement le long d'un segment actif (26) du trajet d'écoulement de fluide de refroidissement à l'intérieur du refroidisseur d'air de suralimentation (10) et dans lequel le fluide de refroidissement est guidé d'un premier point (36) du trajet d'écoulement de fluide de refroidissement à un second point (38) du trajet d'écoulement de fluide de refroidissement, qui se trouve en aval du premier point (36) le long du trajet d'écoulement de fluide de refroidissement, à travers une dérivation (32), qui présente un trajet d'écoulement de détournement (34) différent d'un trajet partiel (24) du trajet d'écoulement de fluide de refroidissement s'étendant entre le premier (36) et le second point (38),
**caractérisé en ce**
**que** le fluide de refroidissement est guidé à travers la dérivation (32) du premier point (36) en amont du segment actif (26) au niveau de la sortie d'air de suralimentation (18) au second point (38) en aval du segment actif au niveau de l'entrée d'air de suralimentation (14).

10. Procédé de refroidissement d'air de suralimentation d'un moteur à combustion interne (44) selon la revendication 9,
**caractérisé par**
l'utilisation d'un refroidisseur d'air de suralimentation (10) avec les caractéristiques selon l'une quelconque des revendications 2 à 6 et/ou l'application du procédé dans un moteur à combustion interne (44) présentant les caractéristiques de la revendication 8.
